# EUROPEAN PATENT APPLICATION

(11) **EP 3 296 640 A1**
(43) Date of publication of application: **21.03.2018**
(21) Application number: 16189714.5
(22) Date of filing: 20.09.2016
(51) Int. Cl.: F23R 3/34, F23R 3/14

(54) **A PILOT BURNER ASSEMBLY WITH CENTRAL PILOT FUEL INJECTION FOR A GAS TURBINE ENGINE COMBUSTOR**

(71) Applicant: Siemens Aktiengesellschaft, 80333 München (DE)
(72) Inventor: Dolmansley, Timothy, Shireoaks, Worksop, S81 8NA (GB); Rogerson, Jim, Lincoln, LN6 0FR (GB)
(74) Representative: Maier, Daniel Oliver

(57) **Abstract**

A pilot burner assembly for a combustion chamber in a gas turbine engine is presented. The pilot burner assembly includes a pilot burner and a radial swirler. On a burner head face of the pilot burner, pilot fuel injection holes are present for providing pilot fuel. The swirler has swirler vanes arranged circumferentially and radially disposed around the burner head face with respect to a center of the burner head face. The swirler vanes have radially inner thin ends that define a burner region. Each pilot fuel injection hole is positioned such that a distance of the hole is equal to or less than 50 percent of a distance of an edge of the burner region, both distances measured from the center of the burner head face along a straight line from the center passing through the hole to the edge of the burner region.

## Description

The present technique relates generally to burners for combustors of gas turbine engines and, more particularly to pilot burner assemblies for combustors of gas turbine engines.

In a gas turbine engine combustor a fuel is combusted or burned to produce hot pressurised exhaust gases which are then fed to a turbine stage where they, while expanding and cooling, transfer momentum to turbine blades thereby imposing a rotational movement on a turbine rotor. Mechanical power of the turbine rotor can then be used to drive a generator for producing electrical power or to drive a machine. However, burning the fuel leads to a number of undesired pollutants in the exhaust gas which can cause damage to the environment. Therefore, it is generally desired to keep the pollutants as low as possible. One kind of pollutant is nitrogen oxide (NO_{X}).

Combustion in present day gas turbine engine combustors, for example Dry Low Emissions (DLE) combustors, is initiated and maintained by using a pilot fuel and a main fuel fed at different positions of the combustor and at different stages of operation, for example in some DLE combustors, the percentage split of pilot fuel is about 4% at full load and increases at part load, primarily to prevent combustion dynamics and flame out as the air-to-fuel ratio increases. However, the pilot fuel may burn in a non-premixed and/or partially premixed mode close to the burner face and generate high levels of thermal NOₓ. It is therefore desired to provide a technique that reduces emissions, particularly NOₓ.

Thus, the object of the present disclosure is to provide a technique that that reduces emissions, particularly NOₓ.

The above object is achieved by a pilot burner assembly according to claim 1, a combustor assembly equipped with such a pilot burner assembly according to claim 11, and a gas turbine engine having at least one such combustor assembly according to claims 12 of the present technique. Advantageous embodiments of the present technique are provided in dependent claims.

In a first aspect of the present technique, a pilot burner assembly for a combustion chamber in a gas turbine engine is presented. The pilot burner assembly includes a pilot burner and a radial swirler. The pilot burner has a burner head face. A plurality of pilot fuel injection holes are present on, and open at, the burner head face. The pilot fuel injection holes, hereinafter also referred to as the holes, provide pilot fuel into the combustion chamber for combustion. The burner head face has a center. The radial swirler generates a swirling mix of a main fuel and air in the combustion chamber. The radial swirler has a plurality of swirler vanes. The swirler vanes are arranged circumferentially around the burner head face with respect to the center of the burner head face and are radially disposed around the center of the burner head face. The swirler vanes include radially inner thin ends. The thin ends positioned around or about the center of the burner head face together define a burner region on the burner head face. The burner region is concentric with the center of the burner head face, i.e. the center of the burner head face is also the center of the burner region.

In the pilot burner assembly of the present technique, each of the pilot fuel injection holes on the burner head face is positioned on the burner head face and within the burner region such that a distance of the pilot fuel injection hole from the center of the burner head face is equal to or less than 50 percent of a distance of an edge of the burner region from the center of the burner head face, when measured along a straight line that joins the center of the burner head face to the edge of the burner region and passes through the pilot fuel injection hole. The distance of the pilot fuel injection hole from the center may be measured from a geometric center of the hole or from a point on the edge of a pilot fuel injection hole boundary that is farthest from the center of the burner head face.

As a result of the placement of the pilot fuel injection holes within a central region or in the vicinity of the center of the burner head face, i.e. because the holes in the present assembly are centrally positioned, the pilot fuel is injected into re-circulated hot product gases close to the burner head face in the combustion chamber, primarily at part load conditions of operations of the gas turbine engine, thus yielding an emission reduction, primarily a reburn NOₓ reduction (destruction of NO by interaction with hydrocarbon radicals). There is a further improvement as the pilot fuel is injected into a region of low oxygen and hence the pilot fuel burns at a lower temperature. Later on in the combustion process, using the present pilot burner assembly a secondary burn may be achieved with a high influx of Oxygen in a main flame region of the combustion chamber during operation of the gas turbine engine. The cool main flame is further stabilized by the presence of additional heat and partially combusted products from the reburning of the pilot fuel. Thus the pilot burner assembly of the present technique reduces NOₓ, and optionally promotes main flame stabilisation.

In an embodiment of the pilot burner assembly, hereinafter also referred to as the burner assembly, the distance of the pilot fuel injection hole from the center of the burner head face is equal to or less than 30 percent of the distance of the edge of the burner region from the center of the burner head face. Thus the holes are nearer to the center of the burner head face and ensure the pilot fuel is injected into re-circulated hot product gases, even when the re-circulation of the hot product gases is confined into a leaner or smaller space around a longitudinal axis of the combustion chamber close to the burner head face in the combustion chamber.

In another embodiment of the burner assembly the distance of the pilot fuel injection hole from the center of the burner head face is equal to or less than 15 percent of the distance of the edge of the burner region from the center of the burner head face. Thus the holes are further near to the center of the burner head face and ensure the pilot fuel is injected into re-circulated hot product gases, even when the re-circulation of the hot product gases is confined into a further smaller space around the longitudinal axis of the combustion chamber close to the burner head face in the combustion chamber.

In another embodiment of the burner assembly the distance of the pilot fuel injection hole from the center of the burner head face is equal to or greater than 5 percent of the distance of the edge of the burner region from the center of the burner head face. Thus the holes are centrally located on the burner head face but not present at the center of the burner head face and ensure better mixing and distribution of the injected pilot fuel into re-circulated hot product gases.

In another embodiment of the burner assembly the distance of the pilot fuel injection hole from the center of the burner head face is equal to or greater than 10 percent of the distance of the edge of the burner region from the center of the burner head face. Thus the holes are centrally located on the burner head face but not present at the center of the burner head face and there is more area on the burner head face within which the holes are positioned thus ensuring better distribution of the holes on the burner head face and better distribution and mixing of the injected pilot fuel into re-circulated hot product gases.

In another embodiment of the burner assembly, the burner region is circular. This provides an embodiment of the assembly where the swirler vanes are symmetrically and circularly located on the burner head face.

In another embodiment of the burner assembly, each of the pilot fuel injection holes is adapted to provide pilot fuel in a radially outwards direction. This is a further improvement over the presently known pilot burners where the pilot fuel is provided in a radially inwards direction. As a result of providing pilot fuel in the radially outwards direction, better distribution and mixing of the injected pilot fuel into re-circulated hot product gases is ensured.

In another embodiment of the burner assembly, the radially outwards direction forms an angle with the burner head face between 30 degrees and 90 degrees, and preferably between 30 degrees and 60 degrees. Thus the pilot fuel pilot fuel is injected into the re-circulated hot product gases in a distributed manner and even when the re-circulated hot product gases are not established in direct physical contact of the burner head face during the operation of the gas turbine engine. The mixing and distribution of the injected pilot fuel is increased.

In another embodiment of the burner assembly, the plurality of the pilot fuel injection holes includes at least a first pilot fuel injection hole and a second pilot fuel injection hole. Each of the first and the second pilot fuel injection holes to provide pilot fuel in the radially outwards direction at different angles with the burner head face. Thus, different holes are used to inject pilot fuel at different angles into the combustion chamber and thereby into the re-circulated hot product gases, which provides a scattered distribution and mixing of the pilot fuel in the re-circulated hot product gases.

In another embodiment of the burner assembly, the pilot fuel injection holes are arranged in a two dimensional array, for example in a single circular arrangement around the center of the burner head face or in a two concentric circular arrangements having different radii. The mixing and distribution of the injected pilot fuel is increased.

In a second aspect of the present technique, a combustor assembly for a gas turbine engine is presented. The combustor assembly includes a combustion chamber having a longitudinal axis, and a pilot burner assembly according to the first aspect of the present technique. The pilot burner assembly is arranged such that the longitudinal axis of the combustion chamber is aligned with the center of the burner head face. The pilot burner, the radial swirler and the combustion chamber are serially arranged along the longitudinal axis. A main burner may be present that provides a main fuel to the combustor chamber through the radial swirler. Thus, the combustor assembly of the present technique has the same advantages as the abovementioned aspect of the present technique.

In a third aspect of the present technique, a gas turbine engine is presented. The gas turbine engine includes at least one combustor assembly which in turn includes a pilot burner assembly according to the first aspect of the present technique.

All previously explained configurations may apply to pilot burners and combustor assemblies with gaseous or liquid fuel operation, or with dual fuel operation. Furthermore, the pilot burner may comprise one or more fuel injection openings differently positioned and in addition to the pilot fuel injection holes of the present disclosure.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: shows part of a gas turbine engine in a sectional view and in which an exemplary embodiment of a pilot burner assembly and an exemplary embodiment of a combustor assembly of the present technique are incorporated;
- FIG 2: schematically illustrates an exploded view of an exemplary embodiment of the combustor assembly including an exemplary embodiment of the pilot burner assembly of the present technique are depicted;
- FIG 3: schematically illustrates a perspective view of a conventionally known pilot burner with a swirler;
- FIG 4: schematically illustrates a top view of the conventionally known pilot burner of FIG 3 along with the swirler;
- FIG 5: schematically illustrates a perspective view of a conventionally known pilot burner of FIG 3 with a conventionally known positioning of the fuel injection holes;
- FIG 6: depicts a schematic section illustrating injection of pilot fuel for a conventionally known pilot burner;
- FIG 7: schematically illustrates a pilot burner assembly of the present technique depicting a swirler and arrangement of pilot fuel injection holes in accordance with aspects of the present technique;
- FIG 8: schematically illustrates the pilot burner assembly of the present technique without the swirler depicting arrangement of the pilot fuel injection holes in accordance with aspects of the present technique;
- FIG 9: schematically illustrates the pilot burner assembly of the present technique without the swirler depicting another arrangement of the pilot fuel injection holes in accordance with aspects of the present technique;
- FIG 10: schematically illustrates the pilot burner of the present technique without the swirler depicting injection of the pilot fuel in accordance with aspects of the present technique;
- FIG 11: depicts a schematic section illustrating injection of pilot fuel from an exemplary embodiment of the pilot burner of the present technique; and
- FIG 12: depicts a schematic section illustrating injection of pilot fuel from another exemplary embodiment of the pilot burner of the present technique; in accordance with aspects of the present technique.

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

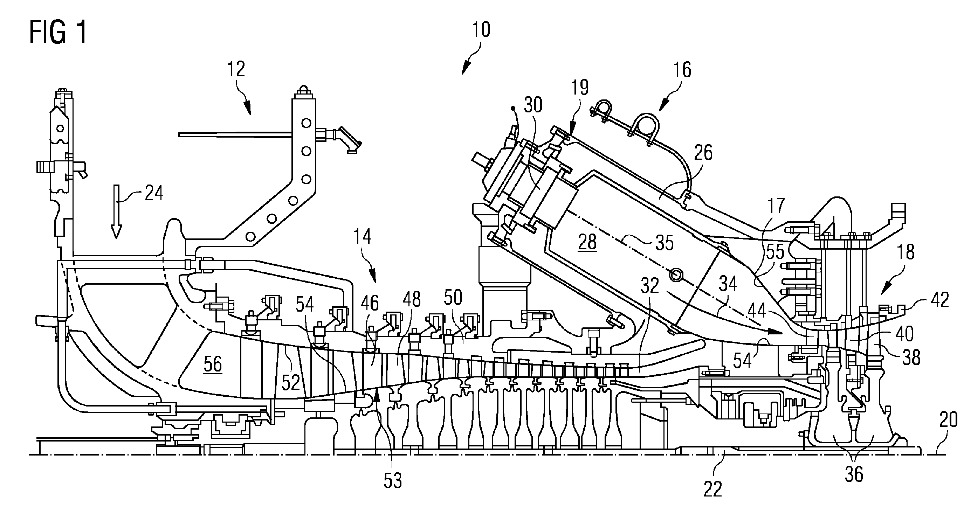

FIG. 1 shows an example of a gas turbine engine 10 in a sectional view. The gas turbine engine 10 comprises, in flow series, an inlet 12, a compressor or compressor section 14, a combustor section 16 and a turbine section 18 which are generally arranged in flow series and generally about and in the direction of a rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 extending along a longitudinal axis 35 and at least one burner 30 fixed to each combustion chamber 28. Generally, the burner 30 comprises a main burner (not shown) and a pilot burner (not shown in FIG 1) The longitudinal axis 35 passes through center of the burner 30. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled through the combustion chamber 28 to the turbine section 18 via a transition duct 17.

This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channelling the combustion gases to the turbine 18.

The turbine section 18 comprises a number of blade carrying discs 36 attached to the shaft 22. In the present example, two discs 36 each carry an annular array of turbine blades 38. However, the number of blade carrying discs could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided and turn the flow of working gas onto the turbine blades 38.

The combustion gas 34 from the combustion chamber 28 enters the turbine section 18 and drives the turbine blades 38 which in turn rotate the shaft 22. The guiding vanes 40, 44 serve to optimise the angle of the combustion or working gas 34 on the turbine blades 38.

The turbine section 18 drives the compressor section 14. The compressor section 14 comprises an axial series of vane stages 46 and rotor blade stages 48. The rotor blade stages 48 comprise a rotor disc supporting an annular array of blades. The compressor section 14 also comprises a casing 50 that surrounds the rotor stages and supports the vane stages 48. The guide vane stages include an annular array of radially extending vanes that are mounted to the casing 50. The vanes are provided to present gas flow at an optimal angle for the blades at a given engine operational point. Some of the guide vane stages have variable vanes, where the angle of the vanes, about their own longitudinal axis, can be adjusted for angle according to air flow characteristics that can occur at different engine operations conditions.

The casing 50 defines a radially outer surface 52 of the passage 56 of the compressor 14. A radially inner surface 54 of the passage 56 is at least partly defined by a rotor drum 53 of the rotor which is partly defined by the annular array of rotor blade stages 48.

The present technique is described with reference to the above exemplary turbine engine having a single shaft or spool connecting a single, multi-stage compressor and a single, one or more stage turbine. However, it should be appreciated that the present technique is equally applicable to two or three shaft engines and which can be used for industrial, aero or marine applications. Furthermore, the cannular combustor section arrangement 16 is also used for exemplary purposes and it should be appreciated that the present technique is equally applicable to annular type and can type combustion chambers.

The terms axial, radial and circumferential as used hereinabove are made with reference to the rotational axis 20 of the engine, unless otherwise stated. The terms axial, radial and circumferential as used hereinafter are made with reference to the longitudinal axis 35 of the combustor chamber 28 and the burner 30 associated with the combustion chamber 28, unless otherwise stated.

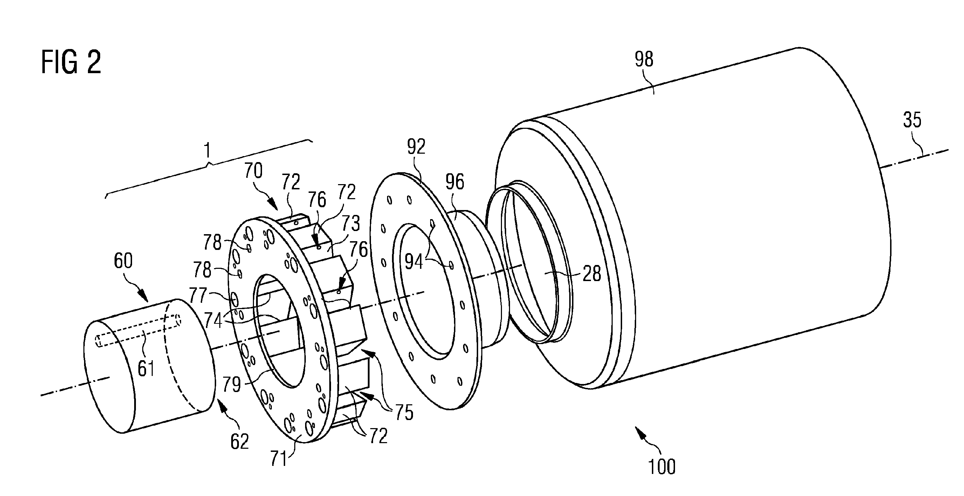

FIG 2 schematically shows an exploded view of an exemplary embodiment of the combustor assembly 100 including an exemplary embodiment of the pilot burner assembly 1 of the present technique. It may be noted that the assemblies 1 and/or 100 generally may include more parts, and in FIG 2 only those parts or components have been depicted that are important for understanding of the present technique.

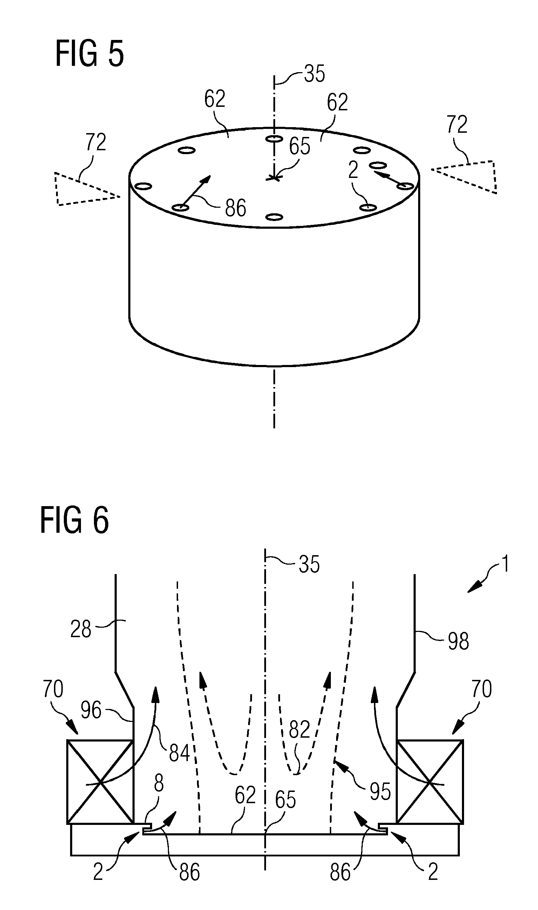

The combustor assembly 100, hereinafter referred to as the assembly 100, includes a pilot burner 60 having a burner head face 62, a radial swirler 70 having swirler vanes 72, generally wedge shaped or pie-slice shaped, positioned on an annular base plate 71 around the burner head face 62 for creating a swirling mix of a fuel and air, an annular closing plate 92 to which the swirler vanes 72 of the swirler 70 are attached and a combustion chamber 28 defined by a combustion casing 98, and optionally a transition piece referred to as a pre-chamber 96 located between the swirler 70 and combustion casing 98. The combustion chamber 28 has a diameter larger than the diameter of the pre-chamber 96. The combustion chamber 28 is connected to the pre-chamber 96 via a dome portion (not shown) comprising a dome plate (not shown). In general, the transition piece 96 or the pre-chamber 96 may be implemented as a one part continuation of the combustion casing 98 towards the pilot burner 60, or as a separate part between the pilot burner 60 and the combustion casing 98. The pilot burner 60 and the combustion chamber 28 show substantially rotational symmetry about the longitudinally axis 35. In general, the longitudinal axis 35 is the axis of symmetry for the combustor assembly 100 and its components including the pilot burner assembly 1. As shown in FIG 5, the longitudinal axis 35 passes through a center 65 (not seen in FIG 2) of the burner head face 62.

In the swirler 70, a plurality, for example twelve, of the swirler vanes 72 are arranged circumferentially spaced around annular base plate 71 so as to form, between adjacent swirler vanes 72, slots 75. The annular base plate 71 includes at the radially outer end of each slot 75 a base injection holes 77 by means of which main fuel is supplied to the swirler 70. Each swirler vane 72 may additionally include at the radially outer end of a side 73 thereof one or more side injection holes 76 by means of which main fuel is also supplied to the swirler 70. A plurality of fixing holes 78 extend through swirler vanes 72 and the base plate 71 through which the swirler vanes 72 are fixed on the base plate 71, as shown in FIG 2. Alternatively, the swirler vanes 72 may be integrally formed, i.e. as one part extension, with the base plate 71. Generally, the base plate 11 is fixed onto an adapter plate (not shown) positioned annularly around the burner head face 62, however the swirler 70 along with the swirler vanes 72 may be positioned for the pilot burner assembly 1 by supporting the swirler 70 on other components (not shown).

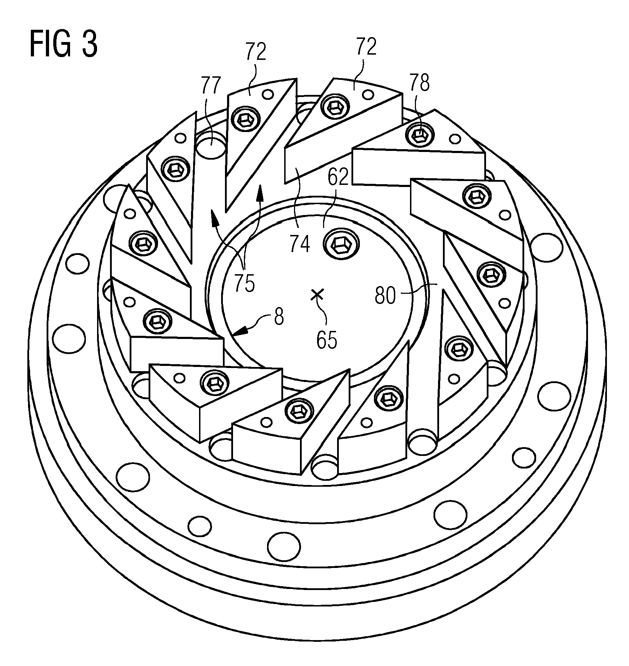

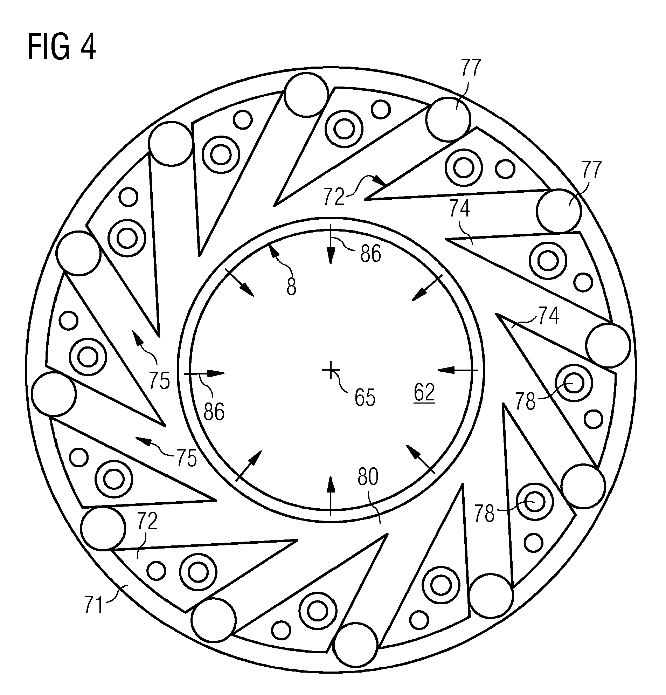

As seen in FIG 3, each swirler vane 72 has a thin end 74 that has a radially inner position. The radially inner thin ends 74 of swirler vanes 72 are set back from a radially inner edge 79 of annular base plate 71 thereby to define an annular ledge 80 (shown in FIGs 3 and 4) immediately radially outward of edge 79.

The pre-chamber 96 is cylindrical in form and may be formed integrally with annular closing plate 92 or may be attached to the annular closing plate 92 through an intermediate component (not shown). Thus, on one face of the annular closing plate 92 the swirler vanes 72 are attached, through a plurality of fixing holes 94 included in the annular closing plate 92 aligned with the fixing holes 78 of the swirler vanes 72 by using nuts and bolts (not shown), and on the other face of the annular closing plate 92 the pre-chamber 96 is integrally formed or attached through an intermediate piece (not shown). It may be noted that the assembly of the swirler 70, the swirler vanes 72, the annular closing plate 92 and the pre-chamber 96 shown in FIGs of the present disclosure are for exemplary purposes only and that there may be other pieces or components, such as other annular plates (not shown) that connect one component to another, for example the swirler vanes 72 may be connected or integrally formed with a top plate (not shown) which may then be connected to the annular closing plate 92.

As shown in FIGs 2 to 4, air is supplied to the radially outer ends of slots 75 of the swirler 70 and travels generally radially inwardly along slots 75 confined between two adjacent swirler vanes 72 on the sides, the base plate 71 at the bottom, and the face of the annular closing plate 92 facing the swirler vanes 72. Main fuel is supplied to base injection holes 77, and optionally to the side injection holes 76 opening in the slots 75, so as to enter slots 75 and mix with the air travelling along slots 75. Thus, the swirler 70 creates a swirling mix of fuel and air in an annular region immediately radially inward of the radially inner ends of slots 75. This swirling mix travels axially along the assembly 100 to combustion chamber 28, passing through the annular closing plate 92, and pre-chamber 96.

The pilot fuel is fed to the combustion chamber 28 through one or more pilot fuel supply lines 61, schematically represented in FIG 2, integrated in the pilot burner 60. The pilot fuel exits the pilot burner 60, particularly the burner head face 62 through pilot fuel injection holes 2 shown in FIGs 5, 6 and 8 to 12 in accordance with aspects of the present technique.

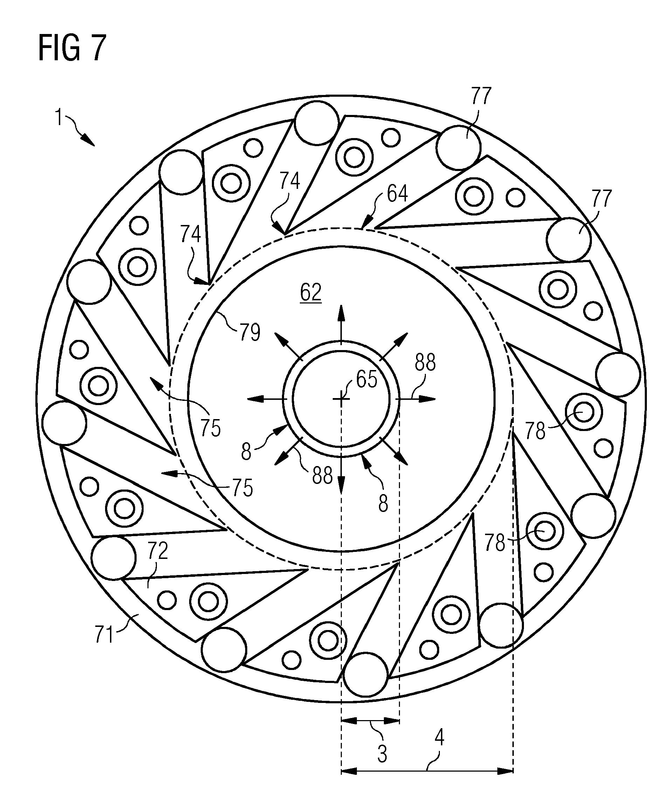

FIGs 3 to 6 are now explained to provide a conventionally known arrangement of the pilot fuel injection holes 2, which is later used, in reference to FIGs 7 to 12, to explain the inventive arrangement of the pilot fuel injection holes 2 of the present technique.

In the conventionally known pilot fuel burners, the pilot fuel injection holes 2, hereinafter also referred to as the holes 2, are present at the periphery of the burner head face 62 usually positioned immediately radially inwards of the edge 79 of the base plate 71 (shown in FIG 2). In the conventional arrangement, the holes 2 are generally covered by a lip 8 as shown in FIGs 3, 4 and 6. As shown in FIGs 4, 5 and 6, the pilot fuel is injected from under the lip 8, i.e. from the holes 2 present under the lip 8, in a radially inward direction 86 towards the center 65, i.e. towards the axis 35 as shown in FIGs 5 and 6. In FIG 5, the triangles formed by dotted line represent the relative position of the swirler vanes 72 with respect to the holes 2 on the burner head face 62.

FIG 6 shows a central re-circulation zone 95 formed by re-circulated hot gases 82, relative to a direction 84 of flow of the main fuel/air and to the direction 86 of the flow of the pilot fuel from the holes 2 of the conventional arrangement.

FIGs 7 to 12 have been explained hereinafter to describe the arrangement of the pilot fuel injection holes 2 on the pilot burner face 62. The explanation of the form and the components of the pilot burner assembly 1, the combustor assembly 100 and the gas turbine engine 1 provided in reference to FIGs 1 to 6 still apply for FIGs 7 to 12, except the conventional arrangement of the holes 2 explained in reference to FIGs 3 to 6.

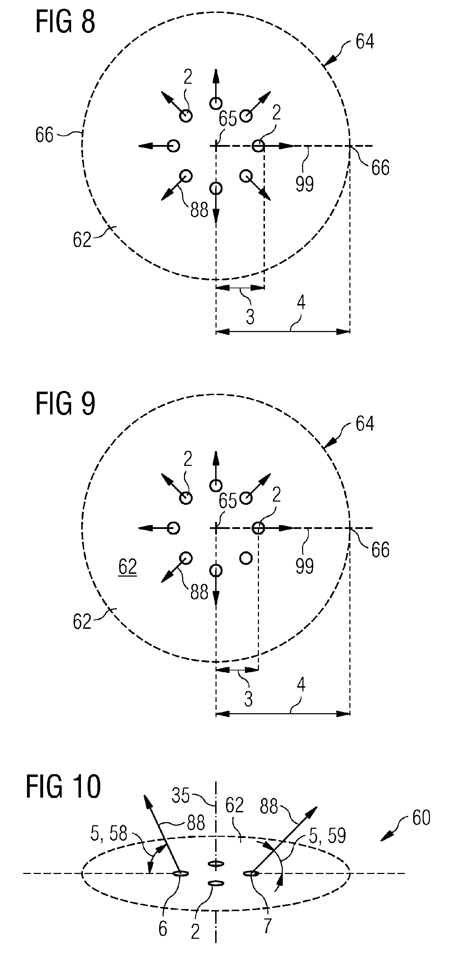

FIGs 7, 8 and 9 explain the inventive arrangement of the pilot fuel injection holes 2 on the pilot burner face 62 of the present pilot burner assembly 1, the combustor assembly 100 and the gas turbine engine 1. FIG 7 schematically illustrates a top view of an exemplary embodiment of the pilot burner assembly 1, hereinafter also referred to as the burner assembly 1 of the present technique depicting the swirler 70 and the pilot burner 60, hereinafter also referred to as the burner 60, having the pilot burner face 62, hereinafter also referred to as the face 62, and an exemplary embodiment of an arrangement of pilot fuel injection holes 2, hereinafter also referred to as the holes 2, in accordance with aspects of the present technique. FIG 8 schematically illustrates the burner assembly 1 of FIG 7 with the swirler 70 removed for more clearly depicting the arrangement of the holes 2 on the face 62, whereas FIG 9 schematically illustrates another exemplary embodiment of the burner assembly 1.

As depicted in FIGs 7 to 9, the burner assembly 1 has the burner 60 with the face 62 having the holes 2 for providing pilot fuel for combustion. The face 62 has a center 65. The holes 2 are multiple in number, for example there may be twelve holes 2 in an embodiment of the burner assembly 1, that are arranged in a symmetrical manner, for example in a circular arrangement around the center 65. The holes 2 may also be arranged in other shapes forming two dimensional arrays, for example the arrangement of the holes 2 may be such that the holes 2 form two concentric circular shapes (not shown) around the center 65.

The face 62 is generally circular and substantially fits into the opening of the annular base plate 71 of the swirler 70. The swirler vanes 72, shown in FIG 7, arranged circumferentially with respect to the center 65, i.e. as well as the longitudinal axis 35, are radially disposed around the center 65. The swirler vanes 72, hereinafter also referred to as the vanes 72, have pie-slice shape or tapering shape or wedge shape and thus include the thin ends 74 that are positioned radially inwards, i.e. towards the center 65. Tips of the thin ends 74 may be imagined to be joined, as shown in FIG 7, to define a region referred to as the burner region 64. In other words, the burner region 64 results from a shape inscribed by the tips of the thin ends 74. Joining of the tips of the thin ends 74 is preferably performed by maintaining the general symmetry of the vanes 72, for example since the vanes 72 are circumferentially arranged the burner region 64 defined may be circular. Similarly, the joining may also be performed by maintaining the shape and symmetry of the face 62. The burner region 64 may be larger than the face 62 and may include the ledge 80 and the face 62. In cases where difference in the axial distance of planes of the face 62 and the tips of the thin ends 74 is substantial, the burner region 64 may be understood as a projection along the axis 35 of the shape, i.e. circle formed of dotted line in FIG 7, on a plane of the face 62.

In case (not shown) the tips of some of the thin end 74 of the vanes 72 are aligned in such a way so as to be radially displaces with respect to one or more of the other vanes 72, the burner region 64 is defined by joining the inner most of the tips of the vanes 72 maintaining the general symmetry of the swirler 70, for example if the vanes 72 are arranged in such a way that the tips of the thin ends 74 of some of the vanes 72 form shape or region say a first circular region, whereas the tips of the thin ends 74 of the other vanes 72 form another shape or region say a second circular region, then radially inner one of the two circular regions is considered to be the burner region 64.

The burner region 64 is concentric with the center 65 of the face 62, or in other words the burner region 64 has a center which is a point on the axis 35 which in turn passes through the center 65.

In the inventive arrangement of the holes 2 in the burner assembly 1, each of the holes 2 on the face 62 is positioned within the burner region 64 such that a distance 3 of the hole 2 from the center 65 of the is equal to or less than 50 percent of a distance 4 of an edge 66 of the burner region 64 from the center 65. The distance 3 of the holes 2 may be defined by the periphery of the lip 8 beneath which the holes 2 are arranged as shown in FIG 7. The distance 3 and the distance 4 are measured along a straight line 99, as shown in FIGs 8 and 9 that joins the center 65 to the edge 66 of the burner region 64, i.e. the boundary of the geometrical shape of the burner region 64, and also passes through the pilot hole 2.

FIGs 8 and 9 provide two ways of measuring the distance 3. As shown in FIG 8 the distance 3 may be measured from the center 65 to a point on an edge (not shown) of the hole boundary (not shown) that is farthest from the center 65 and on the straight line 99, and thus the distance 3 includes the diameter of the hole 2, in other words includes the hole 2. Alternatively, as shown in FIG 9 the distance 3 may be measured from the center 65 to a geometric center (not shown) of the hole 2.

In another embodiment of the burner assembly 1, the distance 3 is equal to or less than 30 percent of the distance 4. In yet another embodiment of the burner assembly 1, the distance 3 is equal to or less than 15 percent of the distance 4.

As shown in FIGs 7 to 9, it may be noted that the holes 2 may not be located at the center 65 of the face 62. The holes 2 may be located in the vicinity of the center 65 compared to the edge 66 of the burner region 64 albeit not at the center 65. In one embodiment of the burner assembly 1, the distance 3 is equal to or greater than 5 percent of the distance 4. In another embodiment of the burner assembly 1, the distance 3 is equal to or greater than 10 percent of the distance 4.

As shown in FIGs 7 to 9 in combination with FIG 10, the holes 2 of the burner assembly 1 of the present technique provide pilot fuel in a radially outwards direction 88, i.e. directed away from the center 65 or the axis 35, as compared to the holes 2 of a prior art burner assembly wherein the holes 2 provide pilot fuel in a radially inwards direction 86 i.e. directed towards the center 65 or the axis 35, as shown in FIGs 4 to 6. As shown in FIG 10, the radially outwards direction 88 forms an angle 5 with the face 62. The angle 5 is between 30 degrees and 90 degrees, and preferably between 30 degrees and 60 degrees. All the holes 2 may provide pilot fuel in such a way that the angle 5 is equal or substantially equal for all the holes 2. Alternatively, as shown in FIG 10, in one embodiment of the burner assembly 1, the plurality of the holes 2 may include two or more types of holes 2 depending on the angle 5 formed by the pilot fuel ejected from them, for example the plurality of the holes 2 may include one or more of a first pilot fuel injection hole 6 and one or more of a second pilot fuel injection hole 7. The first pilot fuel injection hole 6 and the second pilot fuel injection hole 7, both provide pilot fuel in the radially outwards direction 88 but at different angles 58,59, respectively, for example the angle 58 may be 60 degrees whereas the angle 59 may be 45 degrees.

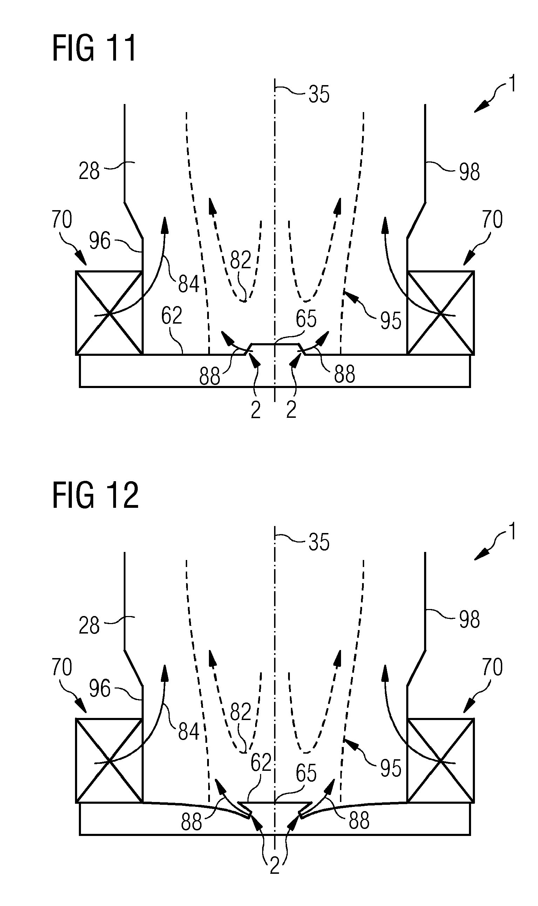

FIGs 11 and 12 depict two exemplary embodiments of the burner assembly 1 with respect to the combustion chamber 28, during an operation of the gas turbine engine 10, and may be compared with FIG 6 that represents the operation of a prior art pilot burner with respect to the pilot fuel injection into the combustion chamber 28. As depicted in FIGs 11 and 12, the central recirculation zone 95 formed around the axis 35 continuous with or very close to the face 62, but not extending through the entire area of the face 62. The pilot fuel in this condition is injected directly into the central recirculation zone 95 because of the positioning of the holes 2 in the burner assembly 1 of the present technique, i.e. because the holes 2 are closer to the center 65 in the burner assembly 1 of the present technique as compared to the holes 2 of the prior art pilot burner. As shown in FIG 12, the holes 2 may be formed angularly with the face 62 so that the injection of the pilot fuel is at the angle 5 or may be covered or positioned under a substructure (not shown) integral with the face 62 such that the pilot fuel when exiting the substructure acquires the angle 5.

The present burner assembly 1 having the arrangement of the holes 2 on the face 62 described hereinabove with respect to FIGs 7 to 12 may be included in the combustor assembly 100 of FIG 2, by aligning the burner assembly 1 in the combustor assembly 100 in such a way that the center 65 of the face 62 of the pilot burner 60 is aligned on the axis 35, i.e. the axis 35 passes through the center 65. The combustor assembly 100 having the burner assembly 1 may be included in the gas turbine engine 10 of FIG 1. It may be noted that the shape of the holes 2 in the present disclosure has been shown as circular for exemplary purposes only and other shapes of the holes 2, for example an oblong shape of the holes 2, is well within the scope of the present technique.

While the present technique has been described in detail with reference to certain embodiments, it should be appreciated that the present technique is not limited to those precise embodiments. It may be noted that, the use of the terms 'first', 'second', etc. does not denote any order of importance, but rather the terms 'first', 'second', etc. are used to distinguish one element from another. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A pilot burner assembly (1) for a combustion chamber (28) in a gas turbine engine (10), the pilot burner assembly (1) comprising:
- a pilot burner (60) comprising a burner head face (62) having a plurality of pilot fuel injection holes (2) adapted to provide pilot fuel for combustion, wherein the burner head face (62) has a center (65); and
- a radial swirler (70) adapted to generate a swirling mix of a main fuel and air, the radial swirler (70) comprising a plurality of swirler vanes (72) arranged circumferentially and radially disposed around the center (65) of the burner head face (62); wherein the swirler vanes (72) include radially inner thin ends (74) that define a burner region (64) and wherein the burner region (64) is concentric with the center (65) of the burner head face (62);
**characterized in that** each of the pilot fuel injection holes (2) on the burner head face (62) is positioned within the burner region (64) such that a distance (3) of the pilot fuel injection hole (2) from the center (65) of the burner head face (62) is equal to or less than 50 percent of a distance (4) of an edge (66) of the burner region (64) from the center (65) of the burner head face (62) when measured along a straight line (99) that joins the center (65) of the burner head face (62) to the edge (66) of the burner region (64) passing through the pilot fuel injection hole (2).

2. The pilot burner assembly (1) according to claim 1, wherein the distance (3) of the pilot fuel injection hole (2) from the center (65) of the burner head face (62) is equal to or less than 30 percent of the distance (4) of the edge (66) of the burner region (64) from the center (65) of the burner head face (62).

3. The pilot burner assembly (1) according to claim 1 or 2, wherein the distance (3) of the pilot fuel injection hole (2) from the center (65) of the burner head face (62) is equal to or less than 15 percent of the distance (4) of the edge (66) of the burner region (64) from the center (65) of the burner head face (62).

4. The pilot burner assembly (1) according to any of claims 1 to 3, wherein the distance (3) of the pilot fuel injection hole (2) from the center (65) of the burner head face (62) is equal to or greater than 5 percent of the distance (4) of the edge (66) of the burner region (64) from the center (65) of the burner head face (62).

5. The pilot burner assembly (1) according to any of claims 1 to 4, wherein the distance (3) of the pilot fuel injection hole (2) from the center (65) of the burner head face (62) is equal to or greater than 10 percent of the distance (4) of the edge (66) of the burner region (64) from the center (65) of the burner head face (62).

6. The pilot burner assembly (1) according to any of claims 1 to 5, wherein the burner region (64) is circular.

7. The pilot burner assembly (1) according to any of claims 1 to 6, wherein each of the pilot fuel injection holes (2) is adapted to provide pilot fuel in a radially outwards direction (88).

8. The pilot burner assembly (1) according to claim 7, wherein the radially outwards direction (88) forms an angle (5) with the burner head face (62) between 30 degrees and 90 degrees, and particularly between 30 degrees and 60 degrees.

9. The pilot burner assembly (1) according to claim 7 or 8, wherein the plurality of the pilot fuel injection holes (2) comprises at least a first pilot fuel injection hole (6) and a second pilot fuel injection hole (7), each of the first (6) and the second pilot fuel injection hole (7) adapted to provide pilot fuel in the radially outwards direction (88) at different angles (58,59) with the burner head face (62).

10. The pilot burner assembly (1) according to any of claims 1 to 9, wherein the pilot fuel injection holes (2) are arranged in a two dimensional array.

11. A combustor assembly (100) for a gas turbine engine (10), the combustor assembly (100) comprising:
- a combustion chamber (28) having a longitudinal axis (35), and
- a pilot burner assembly (1) according to one of claims 1 to 10, wherein the pilot burner assembly (1) is arranged such that the longitudinal axis (35) of the combustion chamber (28) is aligned with the center (65) of the burner head face (62) and wherein along the longitudinal axis (35) the pilot burner (60), the radial swirler (70) and the combustion chamber (28) are serially arranged.

12. A gas turbine engine (10) comprising at least one combustor assembly (100), the at least one combustor assembly (100) comprising a pilot burner assembly (1) according to one of the claims 1 to 10.
